**Europäisches Patentamt**

**European Patent Office**

**Office européen des brevets**

(19)

(11) Veröffentlichungsnummer: **0 141 071**
**B1**

(12) # EUROPÄISCHE PATENTSCHRIFT

(45) Veröffentlichungstag der Patentschrift:
**11.05.88**

(51) Int. Cl.⁴: **F 02 F 3/00**, F 16 J 1/08

(21) Anmeldenummer: **84109284.4**

(22) Anmeldetag: **04.08.84**

(54) Tauchkolben für Verbrennungsmotoren.

(30) Priorität: **22.10.83 DE 3338474**

(43) Veröffentlichungstag der Anmeldung:
**15.05.85 Patentblatt 85/20**

(45) Bekanntmachung des Hinweises auf die Patenterteilung:
**11.05.88 Patentblatt 88/19**

(84) Benannte Vertragsstaaten:
**DE FR GB IT**

(56) Entgegenhaltungen:
**WO - A - 80/00738**
**AT - B - 208 657**
**DE - A - 2 646 922**
**DE - A - 3 022 858**
**DE - C - 437 422**
**US - A - 1 760 122**
**US - A - 2 407 440**

(73) Patentinhaber: **MAHLE GMBH,**
**Pragstrasse 26-46 Postfach 50 07 69,**
**D-7000 Stuttgart 50 (DE)**

(72) Erfinder: **Ellermann, Jürgen, Georg-Brandt-Weg 12,**
**D-7057 Winnenden (DE)**
Erfinder: **Pfeiffenberger, Horst, Dahlienweg 8,**
**D-7012 Fellbach (DE)**

(74) Vertreter: **Pfusch, Volker, Dipl.-Ing., MAHLE GMBH**
**Patentabteilung Pragstrasse 26-46 Postfach 50 07 69,**
**D-7000 Stuttgart 50 (DE)**

## Beschreibung

Die Erfindung betrifft einen Tauchkolben für Verbrennungsmotoren nach dem Oberbegriff des Patentanspruchs 1.

Ein derartiger Kolben ist aus DE-C 437 422 bekannt. Das mit jener Ausführung verfolgte Ziel ist es, die Reibung des an seinen Tragseiten unter Querkraft an der Zylinderwand des Motors gleitenden Kolbens möglichst gering zu halten. Zu diesem Zweck sind in den Tragseiten des Kolbens Einsenkungen mit in Achsrichtung des Kolbens geneigten Flächen vorgesehen, an denen sich hydrodynamische Schmierölkeile nach dem bekannten Prinzip des Wasserski-Effekts ausbilden können. Allerdings ist die Neigung innerhalb der Einsenkungen auf der Druck- und Gegendruckseite unterschiedlich und zwar derart, dass sich der Schmierölkeil auf der Druckseite ausschliesslich während des Expansionshubes und auf der Gegendruckseite während des Kompressions- und Ausschubhubes ausbildet.

Eine ähnliche Ausbildung zeigt einen Kolben nach AT-B 208 657, bei dem im Prinzip in gleicher Weise wirkende Einsenkungen mit geneigten Abschnitten vorgesehen sind. Das Ziel einer Reibungsverminderung zwischen Kolbentragseiten und Motorzylinder wird auch bei dem Kolben nach WO-A 8 000 738 verfolgt. Dort sind umfangsmässig offen auslaufende geneigte Abschnittsbereiche auf der Kolbenschaftoberfläche vorgesehen. Dabei ist die Neigung in den sich diametral gegenüberliegenden Tragflächenbereichen jeweils die gleiche.

Aus DE-A 3 228 982 ist weiterhin ein Kolben bekannt, bei dem bei aus dem Kolbenschaft herausragenden einzelnen Tragflächenbereichen der Übergang zwischen den herausragenden Flächen und dem übrigen Schaftbereich als schräg verlaufende Rampe ausgebildet ist. An diesen Rampen soll sich ebenfalls der oben beschriebene Schmierölkeil zur Führung des Kolbens auf einem Ölfilm auf den herausragenden Tragflächenbereichen einstellen.

Zur Dämpfung von Kippbewegungen von Tauchkolben ist ferner in der DE-A 3 022 858 bereits vorgeschlagen worden, auf den Tragseiten des Kolbenschaftes längs der Kolbenachse verlaufende Zonen mit vergrössertem Spiel zwischen Kolbenschaft und Zylinderwand vorzusehen. Diese Zonen mit vergrössertem Spiel laufen jeweils zum oberen und unteren Ende des Kolbenschaftes offen aus. Die Dämpfung soll dabei durch jeweils am Rande der Tragzonen des Kolbenschaftes verlaufende Zonen engsten Spieles dadurch erreicht werden, dass dort das Schmieröl dämpfend wirkende Quetschzonen durchströmen muss.

Eine vom Prinzip vergleichbare Kolbenschaftausbildung zeigt auch die US-PS 3 058 792. Dort weist der Kolbenschaft die parallel zur Kolbenachse verlaufenden Quetschspalte allerdings nicht direkt an den Rändern der Tragseiten des Kolbenschaftes auf, sondern am Ende des Kolbenbolzens. Die dämpfende Wirkung hat dort jedoch die gleiche Ursache, die wiederum darin besteht, dass bei einem Kippen des Kolbens Schmieröl durch einen engen Quetschspalt verdrängt werden muss.

Bei dem vorstehend geschilderten vorbekannten Stand der Technik geht es somit entweder darum, die aufgrund der Kippbewegung des Kolbens bedingten Geräusche zu vermindern oder die Reibung zwischen Kolbenschaft und Zylinderwand zu verringern bzw. wird eine Kombination beider Massnahmen angestrebt.

Ausgehend von der Schaftausführung nach DE-C 437 422 liegt der Erfindung die Aufgabe zugrunde, die zur Erzeugung hydrodynamischer Schmierkeile an der Kolbenschaftoberfläche an sich bekannten Massnahmen noch weiter in Richtung auf eine bessere Effizienz in bezug auf die Vermeidung unerwünschter Kippbewegungen des Kolbens, insbesondere in den Kolbenbewegungsumkehrbereichen, auszubilden.

Bei der Lösung nach der DE-C 437 422, bei der jeweils und zwar abwechselnd nur auf einer der beiden Tragseiten des Kolbenschaftes Schmierölkeile ausgebildet werden, fehlt gerade in diesen Bewegungsumkehrbereichen die für einen geräuscharmen Kolbenlauf erforderliche kippsichere Führung. Bedingt ist dies dort durch die entgegengesetzt geneigten Abschnittsbereiche des Kolbenschaftes, die eine zentrische Führung des Kolbens gerade am unteren Ende des Schaftes verhindern.

Die vorliegende Aufgabe wird bei dem gattungsgemässen Kolben durch eine Anordnung der die geneigten Abschnitte enthaltenden Einsenkungen auf dem Kolbenschaft nach den kennzeichnenden Merkmalen des Anspruchs 1 gelöst.

Die Wirkungsverbesserung kommt bei der erfindungsgemässen Kolbenschaftausbildung gegenüber den aus der WO 8 000 738 bekannten geneigten Kreisringflächen dadurch zustande, dass diese nicht den gesamten Umfang des Kolbenschaftes umlaufen, sondern nur beschränkte Bereiche, in denen sie in Umfangsrichtung begrenzt sind. Dadurch wird die Ausbildung eines nach dem Wasserski-Effekt erzeugten hydrodynamischen Schmierölkeiles insofern verbessert, als das Schmieröl während der Druckaufbauphase an der geneigten Fläche nicht in Umfangsrichtung entweichen kann. Ein solches Entweichen wäre zwar theoretisch auch bei einer umlaufenden geneigten Kreisringfläche dann nicht möglich, wenn der Kolben tatsächlich während seiner Hubbewegung längs seines Schaftumfanges keine Laufspielveränderungen durch Kippen des Kolbens erfahren würde. In der Praxis ist dies jedoch nicht der Fall, so dass stets Öl in Umfangsrichtung in den Bereich des sich vergrössernden Laufspieles abfliessen kann. Im übrigen erfolgt ein solches Verdrängen in Umfangsrichtung auch immer dann, wenn die geneigte Kreisringfläche an irgendeiner Stelle des Kolbenschaftumfanges unterbrochen ist, ohne dass an den Auslaufstellen Massnahmen zur Spaltverringerung zwischen der geneigten Fläche und der Zylinderlaufbahn vorgesehen sind. Gegenüber dem Kolben nach DE-C 437 422 besteht die Wirkverbesserung darin, dass die Einsenkungen auf der Druck- und Gegendruckseite d.h. auf beiden Tragseiten des Kolbenschaftes nur Abschnitte gleicher Neigung besitzen, wodurch die zur Vermeidung von Kippbewegungen des Kolbens erforderliche zentrische Führung verbessert wird.

Teilweise reicht es bereits aus, wenn die axiale Höhe der Schafteinsenkungen im Vergleich zu der gesamten Schafthöhe relativ gering ist, wobei bereits Höhen ab etwa 3 mm ausreichend sein können. In diesen Fällen wird praktisch die gesamte axiale Höhe der Schafteinsenkung von dem geneigten Kreisringflächenbereich eingenommen.

Obwohl die Schafteinsenkungen sowohl an dem oberen als auch an dem unteren Schaftende vorgesehen sein können, kommt der Schafteinsenkung am unteren Schaftende in der Regel das grössere Gewicht bei.

Obwohl es erfindungsgemäss besonders wichtig ist, dass die in Hubrichtung weisenden Grenzbereiche der Schafteinsenkungen geneigte Kreisringflächenabschnitte aufweisen, empfiehlt es sich, auch die in Umfangsrichtung des Schaftes liegenden Grenzbereiche der Schafteinsenkungen mit derart geneigten Flächenstreifen oder anders ausgedrückt mit geneigten Rampen zu versehen, wie sie zur Erzeugung eines hydrodynamischen Schmierölkeiles auch in Umfangsrichtung des Kolbenschaftes erforderlich sind. Die erforderlichen Neigungen ergeben sich aus den für die Ausbildung eines wirksamen hydrodynamischen Schmierkeiles im Stand der Technik bekannten Werten für die einzuhaltende Spaltgrösse.

So sollen die zur Hubrichtung des Kolbens geneigt ausgerichteten Flächenabschnitte der Schafteinsenkungen etwa zwischen 10 und 90 Minuten zu einer um den jeweiligen Einsenkungsrandbereich zylindrischen Schaftmantelfläche geneigt sein.

Bei längs der Kolbenachse grossen Höhen der Schafteinsenkungen reicht es aus, wenn lediglich die Randbereiche etwa in der Form eines umlaufenden Streifens mit gegenüber einer zylindrischen Mantelfläche nach innen geneigten Flächen ausgebildet sind. Diese Streifen kann man auch als geneigte umlaufende Rampe bezeichnen. Innerhalb des Rampenbereiches kommt es bezüglich der Formgestaltung der Schafteinsenkung lediglich darauf an, diesen Bereich zumindest radial nach aussen nicht höher zu legen als den tiefsten nach innen weisenden Bereich der umlaufenden Rampe.

In manchen Fällen ist es sogar möglich, den innerhalb der Rampen liegenden Bereich in dem Kolbenschaft vollkommen auszusparen, wodurch Kolbengewicht eingespart werden kann.

Ein Ausführungsbeispiel ist in der Zeichnung dargestellt. Es zeigen:

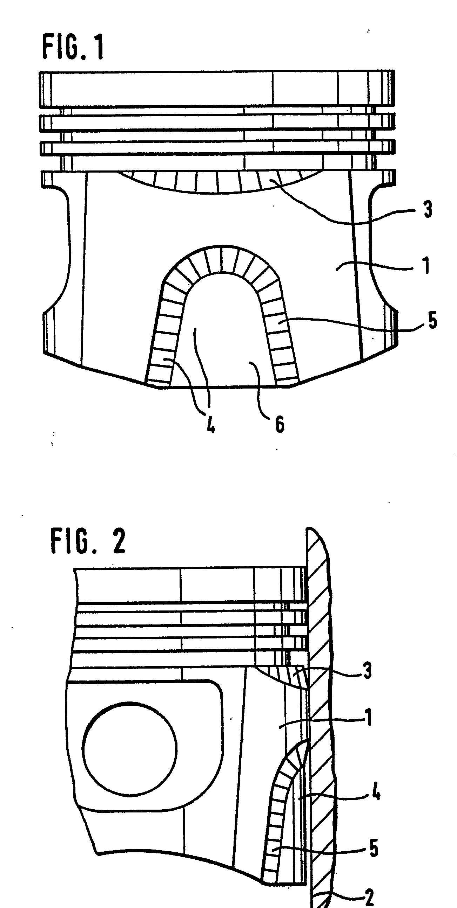

Fig. 1 eine Ansicht des Kolbens in Richtung senkrecht zur Bolzenachse,

Fig. 2 einen Ausschnitt aus einer Ansicht auf den Kolben in Richtung der Bolzenachse zusammen mit einem Ausschnitt des angrenzenden Zylinders.

Der Schaft des Kolbens weist eine Form auf, bei der der Schaft lediglich in dem Laufflächenbereich 1 an der Laufbahn des Zylinders 2 geführt wird. An dem oberen und unteren Schaftende sind jeweils Schafteinsenkungen 3 und 4 vorgesehen. Während bei der oberen Schafteinsenkung 3 der gesamte Bereich von einem geneigten Kreisringflächenabschnitt gebildet wird, ist die Einsenkung 4 nur in ihrem Randbereich zu dem angrenzenden Laufflächenbereich 1 mit einem Streifen 5 aus nach innen geneigten Flächen versehen. Der im Zentrum 6 liegende Bereich der Schafteinsenkung 4 ist dagegen lediglich zylindrisch aus dem Laufflächenbereich 1 zurückgesetzt. Die geneigten Flächenabschnitte in den Einsenkungen 3 und 4 sind zur Verbesserung der Anschaulichkeit schraffiert angelegt. Der Bereich des Zentrums 6 der Einsenkung 4 kann zur Verminderung des Kolbengewichtes in vielen Fällen auch ganz aus dem Kolbenschaft ausgespart sein, d.h. der Kolbenschaft weist dort eine durchgehende Öffnung auf. Der erfindungsgemäss erwünschte hydrodynamische Schmierölkeil kann sich an den geneigten Flächen der umfangsmässig geschlossenen Einsenkungen 3 und 4 in erheblich wirksamerer Weise ausbilden, als dies bei umfangsmässig offenen geneigten Kreisringflächen möglich wäre. Darin liegt der besondere Vorteil der erfindungsgemässen Kolbenschaftausgestaltung, wenn bereits auf beiden Tragseiten in gleicher Richtung geneigte Abschnitte vorhanden sind.

**Patentansprüche**

1. Tauchkolben für Verbrennungsmotoren, bei dem die Lauffläche des Schaftes mit aus der zylindrischen Mantelfläche des Kolbens nach innen geneigten umfangsmässig nur einzelne Teilbereiche des Kolbenschaftes einnehmenden Abschnitten versehen ist, deren Neigung jeweils derart ausgerichtet ist, dass im Motorbetrieb durch die translatorische Bewegung des Kolbens hydrodynamische die Führung des Kolbens beeinflussende Schmierölkeile zwischen Kolbenschaft und Zylinderwand entstehen, wobei eine mindestens aus einem geneigten Abschnitt bestehende in die Schaftoberfläche hineinragende Schafteinsenkung frei nur in das untere Schaftende ausläuft, gekennzeichnet durch die Merkmale:
a) auf jeder Seite der Ebene, die von den Achsen des Kolbenbolzens und des Kolbens aufgespannt ist, läuft eine Schafteinsenkung (4) nur in das untere Schaftende frei aus,
b) die Schafteinsenkungen (4) liegen in den Tragbereichen des Kolbens und umschliessen dort einen Bereich, in dem die auf der Bolzenachse senkrecht stehende die Kolbenachse aufnehmende Ebene den Kolbenschaft schneidet.

2. Tauchkolben nach Anspruch 1, dadurch gekennzeichnet, dass die Ausdehnung der geneigten Abschnitte (3, 5) innerhalb einer Schafteinsenkung in Achsrichtung des Kolbens mindestens 3 mm beträgt.

3. Tauchkolben nach Anspruch 1 oder 2, dadurch gekennzeichnet, dass die geneigten Abschnitte (3, 5) die gesamte axiale Höhe zumindest einzelner Schafteinsenkungen (3, 4) einnehmen.

4. Tauchkolben nach einem der vorhergehenden Ansprüche, dadurch gekennzeichnet, dass die zur Hubrichtung des Kolbens geneigt ausgerichteten Abschnitte der Einsenkungen (3, 4) um 10–90 Minuten zu einer um den jeweiligen Einsenkungsrandbereich gelegten zylindrischen Schaftmantelfläche geneigt sind.

5. Tauchkolben nach einem der vorhergehenden Ansprüche, dadurch gekennzeichnet, dass die geneigt ausgerichteten Abschnitte (3, 5) der Einsenkungen (3, 4) eine radiale Tiefe von etwa 25–125 µm aufweisen und dass das nicht geneigte Zentrum (z.B. 6 bei der Einsenkung 4) etwa zylindrisch verläuft.

6. Tauchkolben nach einem der vorhergehenden Ansprüche, dadurch gekennzeichnet, dass die Schafteinsenkungen (3, 4) lediglich einen äusseren umlaufenden Randbereich (z.B. 5 bei der Einsenkung 4) mit gegenüber einer zylindrischen Mantelfläche nach innen geneigten Flächen aufweisen, während der Schaft in den übrigen Bereichen der Schafteinsenkung (3, 4) lediglich zurückgesetzt ist.

7. Tauchkolben nach einem der vorhergehenden Ansprüche, dadurch gekennzeichnet, dass der Kolbenschaft im Zentrum (6) der Schafteinsenkungen (4) ausserhalb der jeweils geneigten Flächenabschnitte (Streifen 5) gänzlich ausgespart ist.

## Claims

1. Plunger piston for internal combustion engines, wherein the running surface of the shank is furnished with zones inclined inwards out of the cylindrical outer surface of the piston and occupying circumferentially only individual part regions of the piston shank, the inclination of which zones is so orientated that, when the engine is running, hydrodynamic lubricating oil wedges which influence the guiding of the piston are produced between the piston shank and the cylinder wall by the translatory motion of the piston, wherein a shank depression, consisting at least of one inclined zone and penetrating into the shank surface runs out freely only at the lower end of the shank, characterized by the features:
a) on each side of the plane passing through the axes of the gudgeon pin and of the piston, a shank depression (4) runs freely out only into the lower end of the shank,
b) the shank depressions (4) lie in the bearing regions of the piston and surround there a region in which the plane perpendicular to the gudgeon pin axis and containing the piston axis intersects the piston shank.

2. Plunger piston according to Claim 1, characterized in that the extent of the inclined zones (3, 5) within a shank depression is at least 3 mm in the axial direction of the piston.

3. Plunger piston according to Claim 1 or 2, characterized in that the inclined zones (3, 5) occupy the entire axial height at least of individual shank depressions (3, 4).

4. Plunger piston according to one of the preceding Claims, characterized in that the zones of the depressions (3, 4) which are inclined to the stroke direction of the piston are inclined at 10–90 minutes to a cylindrical shank outer surface located around the edge region of the relevent depression.

5. Plunger piston according to one of the preceding Claims, characterized in that the inclined zones (3, 5) of the depressions (3, 4) have a radial depth of about 25–125 µm and that the non-inclined centre (e.g. 6 in depression 4) extends generally cylindrically.

6. Plunger piston according to one of the preceding Claims, characterized in that the shank depressions (3, 4) possess only an outer, peripheral edge region (e.g. 5 in depression 4) having surfaces inclined inwardly relative to a cylindrical shank outer surface, whereas the shank is only set back in the other regions of the shank depression (3, 4).

7. Plunger piston according to one of the preceding Claims, characterized in that the piston shank, in the centre (6) of the shank depressions (4) and outside the relevant inclined area zones (strips 5), is completely cut away.

## Revendications

1. Piston fourreau destiné à des moteurs à combustion interne, dans lequel la surface de glissement du corps est munie de parties inclinées vers l'intérieur en partant de la surface de jupe cylindrique du piston, qui ne s'étendent en position que sur des zones partielles individuelles du corps de piston, dont l'inclinaison est, à chaque fois, dirigée de telle façon que lors du fonctionnement du moteur, des coins d'huile de lubrification hydrodynamiques qui ont une influence sur le guidage du piston grâce au mouvement de translation du piston, sont créés entre le corps de piston et la paroi de cylindre, une cavité de corps constituée par au moins une partie inclinée, s'enfonçant à l'intérieur de la surface de corps, n'ayant d'issue dégagée que vers l'extrémité inférieure du corps, caractérisé par le fait que
a) de chaque côté du plan défini par l'axe de piston et l'axe longitudinal du piston, une cavité (4) de corps n'a d'issue dégagée que dans l'extrémité inférieure du corps,
b) les cavités de corps (4) se trouvent dans les zones porteuses du piston et délimitent une zone dans laquelle le plan, dans lequel est inclus l'axe de piston perpendiculaire à l'axe longitudinal du piston, coupe le corps de piston.

2. Piston fourreau selon la revendication 1, caractérisé par le fait que l'extension des parties inclinées (3, 5) à l'intérieur d'une cavité de corps dans la direction de l'axe du piston, est d'au moins 3 mm.

3. Piston selon l'une des revendications 1 ou 2, caractérisé par le fait que les parties inclinées (3, 5) occupent l'ensemble de la hauteur dans la direction axiale d'au moins certaines cavités (3, 4) de corps.

4. Piston selon l'une quelconque des revendications 1 à 3, caractérisé par le fait que les parties des cavités (3, 4) inclinées par rapport à la direction de la course du piston, sont inclinées de 10 à 90 minutes par rapport à une surface cylindrique de la jupe située autour de chacune des zones de cavité.

5. Piston fourreau selon l'une quelconque des revendications 1 à 4, caractérisé par le fait que les parties (3, 5) inclinées des cavités (3, 4) présentent une profondeur radiale d'environ 25 à 125 μm et que le centre non incliné, tel que 6 dans la cavité 4, est sensiblement cylindrique.

6. Piston fourreau selon l'une quelconque des revendications 1 à 5, caractérisé en ce que les cavités (3, 4) ne présentent qu'une zone marginale externe les entourant (telle que 5 dans la cavité 4) comportant des surfaces inclinées vers l'intérieur par rapport à une surface de jupe cylindrique, tandis que dans les autres zones de la cavité (3, 4) le corps est sensiblement en retrait.

7. Piston fourreau selon l'une quelconque des revendications 1 à 6, caractérisé en ce que le corps de piston comporte une réserve complète de la partie centrale (6) des cavités du corps (4) située en dehors des parties de surfaces inclinées (5).

FIG. 1

FIG. 2